(19) Europäisches Patentamt
European Patent Office
Office européen des brevets

(11) **EP 3 176 527 B1**

(12) **EUROPÄISCHE PATENTSCHRIFT**

(45) Veröffentlichungstag und Bekanntmachung des Hinweises auf die Patenterteilung:
**06.02.2019  Patentblatt 2019/06**

(51) Int Cl.:
*F27D 19/00* *(2006.01)*      *B01J 6/00* *(2006.01)*
*C04B 11/028* *(2006.01)*      *F27D 17/00* *(2006.01)*

(21) Anmeldenummer: **16201039.1**

(22) Anmeldetag: **29.11.2016**

(54) **KALZINIERANLAGE UND VERFAHREN ZUM KALZINIEREN**

CALCINATION PLANT AND PROCESS FOR CALCINATION

INSTALLATION DE CALCINATION ET PROCÉDÉ DE CALCINATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2015  DE 102015223866**

(43) Veröffentlichungstag der Anmeldung:
**07.06.2017  Patentblatt 2017/23**

(73) Patentinhaber: **Claudius Peters Projects GmbH 21614 Buxtehude (DE)**

(72) Erfinder: **Göcke, Volker 21702 Ahlerstedt (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**EP-A1- 2 163 532      CN-A- 1 803 689
CN-U- 204 138 538      DE-A1- 3 738 301
FR-A5- 2 165 393**

EP 3 176 527 B1

**Beschreibung**

Die Erfindung betrifft eine Kalzinieranlage und ein Verfahren zur Kalzinierung von pulverförmigen oder feinkörnigen Gut.

Zur Kalzinierung von bspw. Gips wird das Rohmaterial zunächst zu pulverförmigem oder feinkörnigen Gut zerkleinert und währenddessen oder anschließend in einem Kalzinieraggregat gebrannt. Als Rohmaterial wird außer bergmännisch gewonnenem Naturgips in zunehmendem Maß sogenannter Recycling-Gips verwendet. Letzterer fällt in großen Mengen bspw. bei der Rauchgasentschwefelung an und weist gegenüber Naturgipsen eine sehr hohe Feuchtigkeit auf.

Beim Kalzinieren von Gips ist es in der Regel erforderlich, dass neben einem gewünschten Trocknen durch Verdampfen des ungebunden in dem Rohgips vorhandenen und so die Feuchtigkeit des Materials im Wesentlichen bildenden Wassers auch noch ein Teil des kristallin im Rohgips gebundenen Wassers verdampft wird. Dadurch wird aus dem im Rohgips enthaltenen Calciumsulfat-Dihydrat bevorzugtes Calciumsulfat-Halbhydrat.

Um für das Verdampfen ausreichende Temperaturen im Kalzinieraggregat zu erreichen, ist häufig ein Heißgasbrenner vorgesehen, der durch die Verbrennung von Brennstoff Hitze erzeugt, die dann dem Kalzinieraggregat zugeführt wird. Dabei wird der Heißgasbrenner in der Regel so geregelt, dass die Temperatur des aus dem Kalzinieraggregat austretenden Gases einen vorgegebenen Wert erreicht. Eine entsprechende Kalzinierung, bspw. mit einer Kalzinieranlage gemäß DE 37 38 301 A1, ist sehr energieaufwändig. Um den Energieaufwand zu senken, schlägt FR 2 165 393 A5 die aus dem Kalzinierreaktor austretende warme Gas zu rezirkulieren, um die Einsatz von Primärenergie zu reduzieren.

Nachteilig an Kalzinieranlagen mit oder ohne Rezirkulation gemäß dem Stand der Technik ist, dass die Qualität und Weiterverarbeitbarkeit des kalzinierten Gipses stark von dem Feuchtigkeitsgehalt des Rohmaterials abhängig ist, wobei bereits kleine Schwankungen im Feuchtigkeitsgehalt innerhalb einer Charge von Rohgips erhebliche Auswirkungen auf die Eigenschaften des kalzinierten Gipses haben können. In CN 204138538 U wird aus diesem Grund vorgeschlagen, den Feuchtigkeitsgehalt des Arbeitsgases sowohl am Einlass als auch am Auslass eines Reaktors zu erfassen und zu einer nicht näher beschriebenen Art und Weise zu regeln. Dabei wird das Arbeitsgas offensichtlich nicht rezirkuliert, sodass auch diese Anlage sehr energieaufwendig ist.

Der Erfindung liegt die Aufgabe zugrunde, eine Kalzinieranlage und ein Verfahren zum Kalzinieren von pulverförmigen oder feinkörnigem Gut zu schaffen, bei der die aus dem Stand der Technik bekannten Nachteile nicht mehr oder nur noch im geringeren Umfang auftreten.

Gelöst wird diese Aufgabe durch eine Kalzinieranlage gemäß dem Hauptanspruch 1 sowie ein Verfahren zum Kalzinieren gemäß dem neben geordneten Anspruch 6. Vorteilhafte Weiterbildungen sind Gegenstand der abhängigen Ansprüche.

Demnach betrifft die Erfindung eine Kalzinieranlage für pulverförmiges oder feinkörniges Gut umfassend einen Kalzinierreaktor und einen Heißgaserzeuger, wobei die Kalzinieranlage derart ausgestaltet ist, dass vom Heißgaserzeuger erzeugtes heißes Gas als Kalziniergas durch den Kalzinierreaktor geführt und wenigstens ein Teil des durch den Kalzinierreaktor geführten Kalziniergases als Rezirkulationsgas zum Heißgaserzeuger zurückgeführt wird, wobei der Heißgaserzeuger ein Heizbrenner mit über eine Steuerungseinheit einstellbaren Verbrennungsluftverhältnis ist, ein Sensor zur Messung des Feuchtigkeitsgehalt des heißen Gases, des Kalziniergases oder des Rezirkulationsgases vorgesehen und mit der Steuerungseinheit verbunden ist, und wobei die Steuerungseinheit zur Regelung des Feuchtigkeitsgehalt des heißen Gases, des Kalziniergases oder des Rezirkulationsgases über Anpassung des Verbrennungsluftverhältnisses des Heizbrenner ausgebildet ist.

Die Erfindung betrifft weiterhin ein Verfahren zur Kalzinierung von pulverförmigen oder feinkörnigen Gut umfassend die Schritte:

a) Zuführen des zu kalzinierenden Guts in einen Kalzinierreaktor;

b) Kalzinieren des zu kalzinierenden Guts im Kalzinierreaktor durch Zuführung von einem als Heizbrenner ausgestalteten Heißgaserzeuger erzeugten heißen Gas als Kalziniergas;

c) Abzweigen eines Teils des aus dem Kalzinierreaktor austretenden Kalziniergas als Rezirkulationsgas und zurückführen des Rezirkulationsgases zum Heißgaserzeuger;

d) Messen des Feuchtigkeitsgehalts des heißen Gases, des Kalziniergases oder des Rezirkulationsgases; und

e) Anpassen des Verbrennungsluftverhältnisses des Heizbrenners zum Regeln des Feuchtigkeitsgehalts des heißen Gases, des Kalziniergases oder des Rezirkulationsgases.

Die Erfindung hat erkannt, dass der Feuchtigkeitsgehalt des im Kalzinierreaktor befindlichen Kalziniergases einen erheblichen Einfluss auf die Qualität des kalzinierten Gipses, aber auch auf den Energieverbrauch der Kalzinieranlage hat.

So wurde zum einen festgestellt, dass eine steigende Kalziniergasfeuchtigkeit höhere Kalziniergastemperaturen erfordert, um eine vorgegebene Zielgröße für den angestrebten Restkristallwasserwert (also den Wasseranteil im fertig kalzinierten Gips) zu erreichen. Höhere Kalziniergastemperaturen führen jedoch unmittelbar zu einem erhöhten Brennstoffverbrauch.

Auf der anderen Seite wurde festgestellt, dass bei einer geringen Kalziniergasfeuchtigkeit zu einer stärkeren Zerstörung der einzelnen Gipspartikel während des Kalzinierens und damit zu höheren spezifischen Oberflächen der Gipspartikel führt. Letzteres verschlechtert den Wassergipswert, erhöht also die bei der späteren Verarbeitung erforderliche Wassermenge zur Herstellung einer fließfähigen Gipssuspension.

Durch die erfindungsgemäß vorgesehene Regelung der Feuchtigkeit des Kalziniergases kann der Kalzinierprozess hinsichtlich des Energieverbrauchs optimiert und gleichzeitig eine gute Qualität des Kalzinierprodukts hinsichtlich der spezifischen Oberfläche erreicht werden, selbst bei Schwankungen des Feuchtigkeitsgehalt im Ausgangsmaterial.

Das dem Kalzinierreaktor über eine Gaszuführung zugeführte heiße Gas sorgt für die Kalzinierung des im Kalzinierreaktor befindlichen pulverförmigen und/oder feinkörnigem Gut. Das im Kalzinierreaktor befindliche Gas wird dabei als Kalziniergas bezeichnet. Das Kalziniergas gelangt dann über einen Gasauslass aus dem Kalzinierreaktor, wo ein Teil des Kalziniergases als Rezirkulationsgas abgezweigt wird. Der restliche Teil des Kalziniergases kann bspw. über einen Schornstein ausgestoßen oder anderen Prozessen als warmes Gas zugeführt werden. Der abgezweigte Teil des Kalziniergases bzw. das Rezirkulationsgas wird dann dem Heißgaserzeuger zugeführt. Der Heißgaserzeuger erzeugt aus Brennstoff und aus der Umgebung zugeführter Verbrennungsluft ein Heizgas, welches mit dem Rezirkulationsgas vermischt wird. Die Mischung wird dann dem Kalzinierreaktor wieder als heißes Gas zugeführt. Es ergibt sich somit ein Gaskreislauf, bei dem die im Kreislauf befindliche Gasmenge grundsätzlich dadurch konstant gehalten werden kann, dass eine der durch den Heißgaserzeuger in den Kreislauf eingebrachte Menge an Heizgas entsprechende Menge an Kalziniergas nicht als Rezirkulationsgas abgezweigt, sondern bspw. über den Schornstein ausgeblasen wird.

Bei dem als Heißgaserzeuger vorgesehenen Heizbrenner wird ein Brennstoff - in der Regel brennbares Gas oder Öl - unter Zuführung einer vorgegebenen Menge an Verbrennungsluft verbrannt. Die Menge an zugeführter Verbrennungsluft lässt sich dabei über das Verbrennungsluftverhältnis darstellen, welches die für die Verbrennung zugeführte Luftmasse ins Verhältnis zur stöchiometrischen Luftmasse setzt

$$\left( \lambda = \frac{m_{zugeführte\ Luftmasse}}{m_{stöchiometrische\ Luftmasse}} \right).$$ Die stöchiometrische Luftmasse bezeichnet dabei diejenige Luftmasse, die für eine vollständige Verbrennung einer gewissen Brennstoffmasse erforderlich ist.

Im Stand der Technik werden Heizbrenner von Kalzinieranlagen häufig überstöchiometrisch betrieben (bspw. $\lambda \approx 1,4 - 1,9$), um eine vollständige Verbrennung des Brennstoffs sicherzustellen. Indem erfindungsgemäß das Verbrennungsluftverhältnis verändert werden kann, indem bspw. bei gleichbleibender Brennstoffmenge mehr Verbrennungsluft in den Gaskreislauf der Anlage eingebracht wird, ändert sich die vom Heizbrenner abgegebene Menge an Heizgas, womit sich wiederum das Mischungsverhältnis aus Rezirkulationsgas und Heizgas in dem, dem Kalzinierreaktor zugeführten heißen Gas ändert. Da das Heizgas in der Regel eine deutlich geringe Feuchtigkeit gegenüber dem Rezirkulationsgas aufweist, lässt sich so der Feuchtigkeitsgehalt des dem Kalzinierreaktor zugeführten heißen Gases und in der Folge auch des Kalziniergases verändern.

Neben der Veränderung der Menge an dem Heizbrenner zugeführter Luft lässt sich das Verbrennungsluftverhältnis des Heizbrenners selbstverständlich auch über die Veränderung der Brennstoffmenge, aus der sich unmittelbar eine Veränderung der stöchiometrischen Luftmenge ergibt, ändern.

Der Feuchtigkeitsgehalt des Kalziniergases kann unmittelbar im Kalzinierreaktor gemessen werden. Es kann jedoch vorteilhaft sein, den Sensor für die Ermittlung des Feuchtigkeitsgehalts des Kalziniergases in einer der Gasleitungen vorzusehen, über die das Kalziniergas aus dem Kalzinierreaktor zugeführt, herausgeleitet oder rezirkuliert wird. Dabei ist es unerheblich, ob der Sensor in Fließrichtung des Gases vor oder hinter der Abzweigung für das Rezirkulationsgas angeordnet (und somit ggf. auch die Feuchtigkeit des Rezirkulationsgases aufnimmt), da der Feuchtigkeitsgehalt von Kalziniergas und Rezirkulationsgas praktisch identisch sind.

Auch ist es möglich, den Feuchtigkeitsgehalt des dem Kalzinierreaktor zugeführten heißen Gases zu messen. Da das heiße Gas wenigstens teilweise aus Rezirkulationsgas besteht, welches den Feuchtigkeitsgehalt des Kalziniergases aufweist, lässt die Feuchtigkeit des heißen Gases für die Erfindung grundsätzlich ausreichende Rückschlüsse auf den Feuchtigkeitsgehalt im Kalzinierreaktor zu. Da die Temperatur des heißen Gases aber deutlich höher ist als diejenige des Kalzinier- oder Rezirkulationsgases ist und entsprechend ein hochtemperaturgeeigneter Feuchtigkeitssensor vorzusehen ist, ist es bevorzugt, den Feuchtigkeitsgehalt des Kalziniergases oder des Rezirkulationsgases zu ermitteln.

Weiter vorzugsweise kann zwischen Kalzinierreaktor und Abzweigevorrichtung ein Gebläse zum Ansaugen des im Kalzinierreaktor befindlichen Kalziniergases angeordnet sein. Die Steuerungseinheit ist dann vorzugsweise dazu ausgebildet, für die Regelung des Feuchtigkeitsgehalts zusätzlich die Saugleistung des Gebläses zu verändern. Durch ein entsprechendes Gebläse lässt sich die insgesamt durch den Kalzinierreaktor geführte Menge an Kalziniergas bzw. Fließgeschwindigkeit des Gases im Gaskreislauf beeinflussen. Bspw. kann so die Kalziniergasmenge erhöht werden, um einen beschleunigten Abtransport von Feuchtigkeit aus dem Kalzinierreaktor zu erreichen.

Es ist weiter bevorzugt, dass im Bereich zwischen Kalzinierreaktor und Gebläse eine steuerbare Luftzufuhröffnung vorgesehen ist, durch die Umgebungsluft dem Kalziniergas beigemengt werden kann. Durch variable Verstellung der Luftzufuhröffnung kann die Menge an Umgebungsluft, die von dem Gebläse angesogen wird, um so mit dem Kalziniergas vermischt zu werden, reguliert werden. Indem die Umgebungsluft regelmäßig einen niedrigeren Feuchtigkeitsgehalt als das Kalziniergas aufweist, ist der Feuchtigkeitsgehalt des Gemisches niedriger als derjenige des Kalziniergases. Die Steuerungseinheit ist vorzugsweise dazu ausgebildet, für die Regelung des Feuchtigkeitsgehalts zusätzlich die Menge der dem Kalziniergas beigemengten Umgebungsluft zu verändern. Ist zwischen Kalzinierreaktor und Gebläse ein Filter vorgesehen, ist die Luftzuführöffnung vorzugsweise zwischen Filter und Gebläse angeordnet.

Auch wenn vorstehend im Wesentlichen auf beispielhafte Maßnahmen für die Reduzierung des Feuchtigkeitsgehalts im Kalziniergas abgestellt wurde, können jeweils entgegengesetzte Maßnahmen verwendet werden, um den Feuchtigkeitsgehalt im Kalziniergas zu erhöhen.

Untersuchungen haben ergeben, dass sich die durch die vorbeschriebenen Maßnahmen zur Feuchtigkeitsregulierung des Kalziniergases die Gasautrittstemperatur - also die Temperatur des Kalziniergases bei Austritt aus dem Kalzinierreaktor - im Regelfall und bei nicht zu erheblichen Schwankungen in der Feuchtigkeit des Ausgangsmaterials nicht oder nur unwesentlich verändert. Damit aber auch größere Schwankungen keine unzulässige Gasautrittstemperaturen zur Folge haben, ist es bevorzugt, wenn ein Temperatursensor zur Messung der Gasaustrittstemperatur des Kalziniergases bei Austritt aus dem Kalzinierreaktor vorgesehen ist. Die Steuerungseinheit ist dann vorzugsweise dazu ausgebildet, neben der Regelung des Feuchtigkeitsgehalt auch die Gasaustrittstemperatur zur regeln. Insbesondere mit den vorstehend erläuterten Maßnahmen ist es dabei möglich, sowohl einen gewünschte Feuchtigkeitsgehalt als auch eine gewünschte Gasaustrittstemperatur zu erreichen. So kann bspw. bei Erhöhung der dem Heizbrenner zugeführten Verbrennungsluft, die eine Reduzierung der Temperatur des Heizgases zur Folge haben kann, die durch den Kalzinierreaktor geführte Menge an Kalziniergas erhöhen, um so weiterhin einen bestimmten Wärmeeintrag in den Kalzinierreaktor und in der Folge die gewünschte Gasaustrittstemperatur zu gewährleisten.

Für den Fall, dass zu einem Zeitpunkt nicht beide Regelziele - Feuchtigkeitsgehalt und Gasautrittstemperatur - erreicht werden können, kann die Steuerungseinrichtung dazu ausgebildet sein, eine Priorisierung der Regelungsziele vorzunehmen. Beispielsweise kann für einen solchen Fall festgelegt sein, die Gasautrittstemperatur auf den gewünschten Wert zu regeln, wobei der Feuchtigkeitsgehalt zumindest zeitweise von der Regelung unberücksichtigt bleibt.

Es ist bevorzugt, wenn der in der Steuerungseinheit hinterlegt Sollwert für den Feuchtigkeitsgehalt zwischen 20 und 60 Volumenprozent, vorzugsweise zwischen 30 und 50 Volumenprozent, weiter vorzugsweise bei ca. 42 Volumenprozent liegt.

Vorzugsweise liegt der in der Steuerungseinheit hinterlegte Sollwert für die Gasaustrittstemperatur zwischen 120 und 180°C, vorzugsweise zwischen 150 und 170°C, weiter vorzugsweise bei 158°C.

Zu Erläuterung des erfindungsgemäßen Verfahrens wird auf die vorstehenden Ausführungen verwiesen.

Die Erfindung wird nun anhand einer bevorzugten Ausführungsform beispielhaft beschrieben. Es zeigt:

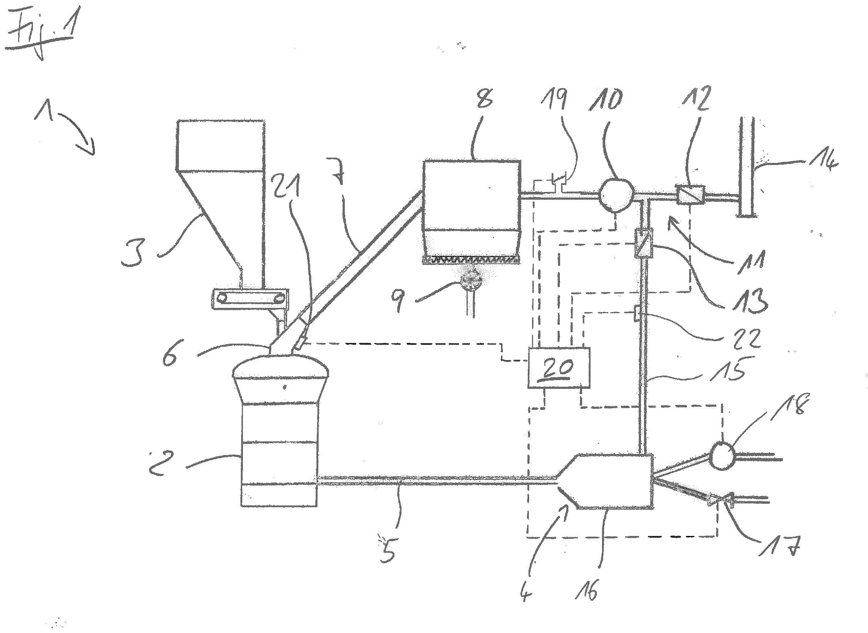

Figur 1: eine schematische Darstellung einer erfindungsgemäßen Kalzinieranlage.

In Figur 1 ist eine erfindungsgemäße Kalzinieranlage 1 dargestellt.

Die Kalzinieranlage 1 umfasst einen als Kugelringmühle ausgestalteten Kalzinierreaktor 2, dem über eine Zuführeinrichtung 3 Rohgips zugeführt wird. Der Rohgips wird in dem Kalzinierreaktor 2 gemahlen und gleichzeitig aufgrund von dem Kalzinierreaktor 2 von dem Heißgaserzeuger 4 über die Leitung 5 zugeführten heißen Gas kalziniert.

Das im Kalzinierreaktor 2 befindliche Kalziniergas tritt aus der Auslassöffnung 6 des Kalzinierreaktors 2 aus und gelangt über die Leitung 7 in die Filtervorrichtung 8. Das Kalziniergas 2 reißt beim Austritt aus dem Kalzinierreaktor 2 nämlich ausreichend fein gemahlene Gipspartikel mit, die über die Filtervorrichtung 8 aus dem Kalziniergas 2 ausgeschieden und über die Zellenradschleuse 9 als kalzinierter Gips abgeführt werden.

Das in der Filtervorrichtung 8 gereinigte Kalziniergas gelangt über das Gebläse 10 zu einer Abzweigevorrichtung 11 mit zwei einstellbaren Drosselklappen 12, 13. Mit den Drosselklappen 12, 13 kann der Druck des in der Kalzinieranlage 1 befindlichen Gases reguliert werden. Die Summe der über die Drosselklappe 12 zum Schornstein 14 geführten Gasmenge und die Rezirkulationsgasmenge entspricht dabei grundsätzlich immer der in die Abzweigevorrichtung 11 hineinströmende Menge an Kalziniergas.

Zwischen der Filtervorrichtung 8 und dem Gebläse 10 ist weiterhin noch eine steuerbare Luftzuführöffnung 19 zum Beimengen von Umgebungsluft in das Kalziniergas vorgesehen.

Über die Leitung 15 gelangt das Rezirkulationsgas zum Heißgaserzeuger 4, der in dem dargestellten Ausführungsbeispiel ein mit Gas betriebener Heizbrenner 16 ist. Über ein einstellbares Ventil 17 wird dem Heizbrenner Brenngas als Brennstoff zugeführt, während über den Kompressor 18 Umgebungsluft als Verbrennungsluft zur Verfügung gestellt wird.

Es ist weiterhin eine Steuerungseinheit 20 vorgesehen, die über die gestrichelt dargestellten Verbindungsleitungen zumindest mit dem Gebläse 10, den Drosselklappen 12, 13 der Abzweigevorrichtung 11, der steuerbaren Luftzuführöffnung 19, sowie dem Ventil 17 und dem Kompressor 18 verbunden und zum Steuern dieser Einrichtung ausgebildet ist. Darüber hinaus kann die Steuerungseinrichtung 20 auch zum Steuern und Regeln weiterer Komponenten der dargestellten Kalzinieranlage 1, wie bspw. dem als Kugelringmühle ausgestalteten Kalzinierreaktor 2 oder der Zuführeinrichtung 3, ausgestaltet sein. Da eine entsprechende Funktionalität für die Erläuterung der vorliegenden Erfindung jedoch nicht Wesentlich ist, wurde auf die Darstellung der dafür erforderlichen Steuerungsleistungen verzichtet.

Die Steuerungseinheit 20 ist weiterhin mit einem, im Bereich der Auslassöffnung 6 des Kalzinierreaktors 2 zum Erfassen der Gasaustrittstemperatur ausgebildeten Sensor 21 sowie mit einem Sensor 22 zum Erfassen des Feuchtigkeitsgehalts des durch die Leitung 15 strömenden Rezirkulationsgases verbunden.

Die Steuerungseinheit 20 ist dazu ausgebildet, aufgrund Basis der von den Sensoren 21, 22 erfassten Gasaustrittstemperatur und dem Feuchtigkeitsgehalt des Rezirkulationsgases - der dem Feuchtigkeitsgehalt des Kalziniergases entspricht - die Feuchtigkeit des Kalziniergases und die Gasautrittstemperatur auf jeweilige Sollwerte zu regeln. Die Steuerungseinheit 20 kann hierzu über die Steuerung des Ventils 17 und/oder des Kompressors 18 das Verbrennungsluftverhältnis und die Menge an Heizgas beeinflussen, über die steuerbare Luftzufuhröffnung 19 die Menge der dem Kalziniergas beigemischten Umgebungsluft einstellen und über die Steuerung des Gebläses 10 den Durchsatz an Kalziniergas verändern. Die ersten beiden genannten Maßnahmen erlauben die Veränderung des dem Kalzinierreaktors 2 zugeführten heißen Gas im Hinblick auf dessen Zusammensetzung, nämlich auf die Eigenschaften des Heizgases und die Eigenschaften des Rezirkulationsgases. Da das Rezirkulationsgas trotz evtl. Beimischung von Umgebungsluft in das Kalziniergas in der Regel eine deutlich höhere Feuchtigkeit als das Heizgas aufweist, kann so der Feuchtigkeitsgehalt des dem Kalzinierreaktor 2 zugeführten heißen Gas beeinflusst werden, was unmittelbare Auswirkungen auf den Feuchtigkeitsgehalt des Kalziniergases hat. Über die weitere Einstellung des Heizbrenners 16 lässt sich auch die Temperatur des Heizgases und damit des heißen Gases einstellen, sodass hierüber die Gasaustrittstemperatur geregelt werden kann. Der Druck des in der Kalzinieranlage 1 befindlichen Gases kann über die Drosselklappen 12, 13 reguliert werden.

Die Gasautrittstemperatur kann darüber hinaus auch über die Steuerung des Gebläses 10 beeinflusst werden. Wird der Durchsatz von Kalziniergas durch den Kalzinierreaktor 2 nämlich erhöht, sinkt die Verweilzeit des Kalziniergases im Kalzinierreaktor 2. In der Folge kann das Kalziniergas im Kalzinierreaktor 2 weniger stark abkühlen, wodurch die Gasaustrittstemperatur gesteigert werden kann.

**Patentansprüche**

1. Kalzinieranlage (1) für pulverförmiges oder feinkörniges Gut umfassend ein Kalzinierreaktor (2) und ein Heißgaserzeuger (4), wobei die Kalzinieranlage (1) derart ausgestaltet ist, dass vom Heißgaserzeuger (4) erzeugtes heißes Gas als Kalziniergas durch den Kalzinierreaktor (2) geführt und wenigstens ein Teil des durch den Kalzinierreaktor geführten Kalziniergases als Rezirkulationsgas zum Heißgaserzeuger (4) zurückgeführt wird,
**dadurch gekennzeichnet, dass**
die Kalzinieranlage eine Steuerungseinheit (20) umfasst und der Heißgaserzeuger (4) ein Heizbrenner (16) mit über die Steuerungseinheit (20) einstellbaren Verbrennungsluftverhältnis ist, ein Sensor (22) zur Messung des Feuchtigkeitsgehalt des heißen Gases, des Kalziniergases oder des Rezirkulationsgases vorgesehen und mit der Steuerungseinheit (20) verbunden ist, und wobei die Steuerungseinheit (20) zur Regelung des Feuchtigkeitsgehalt des heißen Gases, des Kalziniergases oder des Rezirkulationsgases über Anpassung des Verbrennungsluftverhältnisses des Heizbrenner (16) ausgebildet ist.

2. Kalzinieranlage nach Anspruch 1,
**dadurch gekennzeichnet, dass**
den Sensor (22) zur Messung des Feuchtigkeitsgehalts des Kalziniergases in einer der Gasleitungen (7, 15) angeordnet ist, über die das Kalziniergas aus dem Kalzinierreaktor herausgeleitet oder über die ein Teil des Kalziniergases rezirkuliert wird.

3. Kalzinieranlage nach einem der vorhergehenden Ansprüche,
**dadurch gekennzeichnet, dass**
zwischen Kalzinierreaktor (2) und Abzweigevorrichtung (11) ein Gebläse (10) zum Ansaugen des im Kalzinierreaktor (2) befindlichen Kalziniergases angeordnet ist, wobei die Steuerungseinheit (20) vorzugsweise dazu ausgebildet ist, für die Regelung des Feuchtigkeitsgehalts zusätzlich die Saugleistung des Gebläses (10) zu verändern.

4. Kalzinieranlage nach dem vorhergehenden Anspruch,
**dadurch gekennzeichnet, dass**
im Bereich zwischen Kalzinierreaktor und Gebläse eine steuerbare Luftzufuhröffnung zum Beimengen von Umgebungsluft in das Kalziniergas vorgesehen ist, wobei die Steuerungseinheit vorzugsweise dazu ausgebildet ist, für die Regelung des Feuchtigkeitsgehalts zusätzlich die Menge der dem Kalziniergas beigemengten Umgebungsluft zu verändern.

5. Kalzinieranlage nach einem der vorhergehenden Ansprüche,
**dadurch gekennzeichnet, dass**
ein Temperatursensor (21) zur Messung der Gasaustrittstemperatur des Kalziniergases bei Austritt aus dem Kalzinierreaktor (2) vorgesehen ist, wobei

6. Verfahren zur Kalzinierung vom pulverförmigen oder feinkörnigen Gut umfassend die Schritte:

  a. Zuführen des zu kalzinierenden Guts in einen Kalzinierreaktor (2);
  b. Kalzinieren des zu kalzinierenden Guts im Kalzinierreaktor (2) durch Zuführung von einem als Heizbrenner (16) ausgestalteten Heißgaserzeuger (4) erzeugten heißen Gas als Kalziniergas;
  c. Abzweigen eines Teils des aus dem Kalzinierreaktor austretenden Kalziniergas als Rezirkulationsgas und zurückführen des Rezirkulationsgases zum Heißgaserzeuger (4);
  d. Messen des Feuchtigkeitsgehalts des Kalziniergases oder des Rezirkulationsgases; und
  e. Anpassen des Verbrennungsluftverhältnisses des Heizbrenners (16) zum Regeln des Feuchtigkeitsgehalts des Kalziniergases oder des Rezirkulationsgases.

7. Verfahren nach Anspruch 6,
**dadurch gekennzeichnet, dass**
für die Regelung des Feuchtigkeitsgehalts zusätzlich der Anteil des als Rezirkulationsgas abgezweigten Kalziniergases verändern wird.

8. Verfahren nach Anspruch 6 oder 7,
**dadurch gekennzeichnet, dass**
für die Regelung des Feuchtigkeitsgehalts zusätzlich die Saugleistung eines zum Ansaugen des im Kalzinierreaktor (2) befindlichen Kalziniergases vorgesehenen Gebläses (10) verändert wird.

9. Verfahren nach einem der Ansprüche 6 bis 8,
**dadurch gekennzeichnet, dass**
die Gasaustrittstemperatur des Kalziniergases bei Austritt aus dem Kalzinierreaktor (2) gemessen und neben der Regelung des Feuchtigkeitsgehalt auch die Gasaustrittstemperatur geregelt wird.

10. Verfahren nach Anspruch 9,
**dadurch gekennzeichnet, dass**
der Sollwert für die Gasaustrittstemperatur zwischen 120 und 180°C ist.

11. Verfahren nach einem der Ansprüche 6 bis 10,
**dadurch gekennzeichnet, dass**
der Sollwert für den Feuchtigkeitsgehalt zwischen 20 und 60 Volumenprozent ist.

die Steuerungseinheit vorzugsweise dazu ausgebildet ist, neben der Regelung des Feuchtigkeitsgehalt auch die Gasaustrittstemperatur zu regeln.

**Claims**

1. Calcination plant (1) for pulverulent or finely-particulate material, comprising a calcination reactor (2) and a hot gas generator (4), where the calcination plant (1) is configured in such a way that hot gas produced by the hot gas generator (4) is conveyed as calcination gas through the calcination reactor (2) and at least part of the calcination gas conveyed through the calcination reactor is recirculated as recycle gas to the hot gas generator (4),
**characterized in that**
the calcination plant comprises a control unit (20) and the hot gas generator (4) is a heating burner (16) having a combustion air ratio which is adjustable via the control unit (20), a sensor (22) for measuring the moisture content of the hot gas, of the calcination gas or of the recycle gas is provided and is connected to the control unit (20), and the control unit (20) is configured for regulating the moisture content of the hot gas, of the calcination gas or of the recycled gas by adaptation of the combustion air ratio of the heating burner (16).

2. Calcination plant according to Claim 1,
**characterized in that**
the sensor (22) for measuring the moisture content of the calcination gas is arranged in one of the gas conduits (7, 15) via which the calcination gas is discharged from the calcination reactor or via which part of the calcination gas is recirculated.

3. Calcination plant according to either of the preceding claims,
**characterized in that**
a blower (10) for extracting the calcination gas present in the calcination reactor (2) is arranged between calcination reactor (2) and branching device (11), where the control unit (20) is preferably configured for additionally altering the suction power of the blower (10) in order to regulate the moisture content.

4. Calcination plant according to the preceding claim,
**characterized in that**
a controllable air inlet opening for mixing ambient air into the calcination gas is provided in the region between calcination reactor and blower, where the control unit is preferably configured for additionally altering the amount of the ambient air mixed into the calcination gas in order to regulate the moisture content.

5. Calcination plant according to any of the preceding claims,
**characterized in that**
a temperature sensor (21) is provided for measuring the gas exit temperature of the calcination gas on exit from the calcination reactor (2), where the control unit is preferably configured for not only regulating the moisture content but also for regulating the gas exit temperature.

6. Process for calcining pulverulent or finely-particulate material, comprising the steps:

   a. introduction of the material to be calcined into a calcination reactor (2);
   b. calcination of the material to be calcined in the calcination reactor (2) by introduction of hot gas produced by a hot gas generator (4) configured as heating burner (16) as calcination gas;
   c. branching-off of part of the calcination gas exiting from the calcination reactor as recycle gas and recirculation of the recycle gas to the hot gas generator (4);
   d. measurement of the moisture content of the calcination gas or of the recycle gas; and
   e. adaptation of the combustion air ratio of the heating burner (16) in order to regulate the moisture content of the calcination gas or of the recycle gas.

7. Process according to Claim 6,
   **characterized in that**
   the proportion of the calcination gas which is branched off as recirculation gas is additionally altered in order to regulate the moisture content.

8. Process according to Claim 6 or 7,
   **characterized in that**
   the suction power of a blower (10) provided for extraction of the calcination gas present in the calcination reactor (2) is additionally altered in order to regulate the moisture content.

9. Process according to any of Claims 6 to 8,
   **characterized in that**
   the gas exit temperature of the calcination gas on exit from the calcination reactor (2) is measured and the gas exit temperature is also regulated in addition to the regulation of the moisture content.

10. Process according to Claim 9,
    **characterized in that**
    the set value for the gas exit temperature is in the range from 120 to 180°C.

11. Process according to any of Claims 6 to 10,
    **characterized in that**
    the set value for the moisture content is in the range from 20 to 60% by volume.

**Revendications**

1. Installation de calcination (1), destinée à un matériau pulvérulent ou à grain fin, comprenant un réacteur de calcination (2) et un générateur de gaz chaud (4), l'installation de calcination (1) étant conçue de manière à guider du gaz chaud, généré par le générateur de gaz chaud (4), comme gaz de calcination à travers le réacteur de calcination (2) et ramener au moins une partie du gaz de calcination, guidé à travers le réacteur de calcination, comme gaz de recirculation au générateur de gaz chaud (4),
   **caractérisée en ce que**
   l'installation de calcination comprend une unité de commande (20) et le générateur de gaz chaud (4) est un brûleur de chauffage (16) dont le taux d'air de combustion est réglable par le biais de l'unité de commande (20), **en ce qu'**un capteur (22) est prévu pour mesurer la teneur en humidité du gaz chaud, du gaz de calcination ou du gaz de recirculation, et est raccordé à l'unité de commande (20) et l'unité de commande (20) étant conçue pour réguler la teneur en humidité du gaz chaud, du gaz de calcination ou du gaz de recirculation en ajustant le rapport d'air de combustion du brûleur de chauffage (16).

2. Installation de calcination selon la revendication 1,
   **caractérisée en ce que**
   le capteur (22) destiné à mesurer la teneur en humidité du gaz de calcination est disposé dans l'un des conduits de gaz (7, 15) par lequel le gaz de calcination sort du réacteur de calcination ou par lequel une partie du gaz de calcination est recyclée.

3. Installation de calcination selon l'une des revendications précédentes,
   **caractérisée en ce que**
   une soufflante (10), destinée à aspirer le gaz de calcination se trouvant dans le réacteur de calcination (2) est disposée entre le réacteur de calcination (2) et un dispositif de dérivation (11), l'unité de commande (20) étant de préférence conçue pour modifier en plus la puissance d'aspiration de la soufflante (10) afin de réguler la teneur en humidité.

4. Installation de calcination selon la revendication précédente,
   **caractérisée en ce que**
   une ouverture d'alimentation en air commandable destinée à ajouter de l'air ambiant dans le gaz de calcination est prévue dans la région située entre le réacteur de calcination et la soufflante, l'unité de commande étant de préférence conçue pour modifier en outre la quantité d'air ambiant ajoutée au gaz de calcination afin de réguler la teneur en humidité.

5. Installation de calcination selon l'une des revendications précédentes,
   **caractérisée en ce que**
   un capteur de température (21) est prévu pour mesurer la température de sortie de gaz du gaz de calcination en sortie du réacteur de calcination (2), l'unité de commande étant de préférence conçue pour réguler également la température de sortie de gaz en plus de la régulation de la teneur en humidité.

6. Procédé de calcination d'un matériau pulvérulent ou à grain fin comprenant les étapes suivantes :

   a. introduire le matériau à calciner dans un réacteur de calcination (2) ;
   b. calciner le matériau à calciner dans le réacteur de calcination (2) par alimentation d'un gaz chaud, comme gaz de calcination, généré par un générateur de gaz chaud (4) conçu comme un brûleur de chauffage (16) ;
   c. dériver une partie du gaz de calcination, sortant du réacteur de calcination, comme gaz de recirculation et ramener le gaz de recirculation au générateur de gaz chaud (4) ;
   d. mesurer la teneur en humidité du gaz de calcination ou du gaz de recirculation ; et
   e. adapter le taux d'air de combustion du brûleur de chauffage (16) pour réguler la teneur en humidité du gaz de calcination ou du gaz de recirculation.

7. Procédé selon la revendication 6,
   **caractérisé en ce que**
   la proportion du gaz de calcination dérivé comme gaz de recirculation est en outre modifiée pour réguler la teneur en humidité.

8. Procédé selon la revendication 6 ou 7,
   **caractérisé en ce que**
   la puissance d'aspiration d'une soufflante (10), prévue pour aspirer le gaz de calcination se trouvant dans le réacteur de calcination (2), est en outre modifiée pour réguler la teneur en humidité.

9. Procédé selon l'une des revendications 6 à 8,
   **caractérisé en ce que**
   la température de sortie du gaz de calcination est mesurée en sortie du réacteur de calcination (2) et la température de sortie de gaz est également régulée en plus de la régulation de la teneur en humidité.

10. Procédé selon la revendication 9,
    **caractérisé en ce que**
    la valeur de consigne de la température de sortie de gaz est comprise entre 120 et 180 °C.

11. Procédé selon l'une des revendications 6 à 10,
    **caractérisé en ce que**
    la valeur de consigne de la teneur en humidité est comprise entre 20 et 60 % en volume.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3738301 A1
- FR 2165393 A5

- CN 204138538 U